# EUROPÄISCHE PATENTANMELDUNG

(11) **EP 4 595 835 A1**
(43) Veröffentlichungstag der Anmeldung: **06.08.2025**
(21) Anmeldenummer: 24219337.3
(22) Anmeldetag: 12.12.2024
(51) Int. Cl.: A47J 31/44, A47J 31/54, A47J 31/60

(54) **VORRICHTUNG ZUM ERWÄRMEN FLÜSSIGER LEBENSMITTEL**

(30) Priorität: 05.02.2024 DE 102024103201
(71) Anmelder: FRANKE Kaffeemaschinen AG, 4663 Aarburg (CH)
(72) Erfinder: Müller, Simon, 5042 Hirschthal (CH); Gradwohl, Nico Ronny, 4600 Otten (CH)
(74) Vertreter: LBP Lemcke, Brommer & Partner Patentanwälte mbB

(57) **Zusammenfassung**

Eine Vorrichtung zum Erwärmen flüssiger Lebensmittel, insbesondere Milch, besitzt eine Pumpvorrichtung zum Fördern des flüssigen Lebensmittels aus einem Vorratsbehälter zu einem Auslass und eine zwischen Pumpvorrichtung und Auslass angeordneten Heizeinrichtung. Die Heizeinrichtung ist als dampfbeheizter Wärmetauscher ausgebildet, der zwei fluidisch getrennte und in gegenseitigem thermischen Kontakt stehende Strömungswege aufweist, wobei ein erster Strömungsweg eingangsseitig mit einem Dampferzeuger verbindbar oder verbunden und ein zweiter Strömungsweg eingangsseitig mit der Pumpvorrichtung und ausgangsseitig mit dem Auslass verbindbar oder verbunden ist.

## Beschreibung

Die vorliegende Erfindung betrifft eine Vorrichtung zum Erwärmen flüssiger Lebensmittel, insbesondere Milch, mit einer Pumpvorrichtung zum Fördern des flüssigen Lebensmittels aus einem Vorratsbehälter zu einem Auslass und mit einer zwischen Pumpvorrichtung und Auslass angeordneten Heizeinrichtung.

Bei Heißgetränkeautomaten wie etwa Kaffeevollautomaten werden Getränkekomponenten wie Milch oder andere flüssige Lebensmittel in Vorratsbehältern vorgehalten und bei der Ausgabe erwärmt und ggf. aufgeschäumt. Für die Erwärmung haben sich zwei unterschiedliche Technologien etabliert: Entweder kann das Medium einen Wärmetauscher bzw. Durchlauferhitzer wie etwa einen Thermoblock durchströmen und wird dabei erwärmt, oder dem Medium kann bei der Ausgabe heißer Dampf beigemischt werden (Dampfinjektion). Auch eine Kombination der genannten Verfahren ist bekannt. So wir in der EP 2 583 596 B1 ein zweistufiges Erwärmungsverfahren für Milch beschrieben. In einer ersten Erwärmungsstufe wird die Milch im Durchlauferhitzer erwärmt. Anschließend wird Dampf zur zusätzlichen Erwärmung in einer zweiten Erwärmungsstufe zugeführt.

Bei einem Durchlauferhitzer wird eine relativ große Oberfläche zum Temperaturaustausch benötigt, um die erforderliche Energie zu übertragen. Dies führt zu einem großen Milch-Volumen welches gespült und gereinigt werden muss. Das in der Leitung befindliche Milchvolumen wird dabei bei jedem Reinigungs- oder Spülvorgang verworfen.

Bei der Erwärmung von Milch oder anderen eiweißhaltigen Lebensmitteln kann es zu Ablagerungen an der Innenwand des Durchlauferhitzers kommen. Die Ablagerungsgeschwindigkeit hängt hierbei im Wesentlichen von Temperatur und Zeitdauer ab, in der der Durchlauferhitzer mit Milch bzw. anderen Lebensmitteln in Kontakt ist. Dies führt dazu, dass die Temperatur auf ca. 65° C begrenzt werden muss. Eine Reduktion der Zeitdauer kann zwar durch regelmäßiges Spülen erreicht werden, dies führt jedoch zu hohem Milch- und Energieverlust. Dadurch sind mit einem herkömmlichen Thermoblock maximale Milch-Temperaturen von etwa 55°C möglich.

Ein Thermoblock besitzt konstruktiv bedingt eine hohe thermische Masse. Dies führt dazu, dass keine kalte Milch durch den Thermoblock ausgegeben werden kann, auch wenn dieser nicht beheizt wird. Soll neben warmer auch kalte Milch ausgegeben werden, wird ein zusätzliches Umschaltventil benötigt.

Der Vorteil eines Durchlauferhitzers liegt darin, dass durch die indirekte Erhitzung kalt erzeugter, feinporiger Milchschaum nicht zerstört wird und seine Eigenschaften weitgehend behält.

Bei der direkten Dampfbeimischung wird die Kondensations-Energie von Dampf ausgenutzt, um die Milch zu erhitzen. Die Erwärmung mittels Dampf kann in sehr kurzer Zeit und auf kleinem Bauraum erfolgen.

Allerdings ist die Dampfbeimischung nicht zur Erwärmung von Milchschaum geeignet, denn kalt erzeugter Milchschaum wird durch das Beigeben von Dampf zerstört oder zumindest sein optisches Erscheinungsbild verschlechtert. Zudem kann es bei der Dampfbeimischung zu Geräuschentwicklung und Beeinträchtigung der Auslaufqualität durch Dampfschläge kommen.

Eine Aufgabe der Erfindung liegt darin, eine verbesserte Vorrichtung zum Erwärmen flüssiger Lebensmittel anzugeben.

Die Aufgabe wird gelöst durch die Merkmale des Anspruchs 1. Vorteilhafte Ausgestaltungen sind den abhängigen Ansprüchen zu entnehmen.

Bei einer Vorrichtung der eingangs genannten Art ist erfindungsgemäß vorgesehen, dass die Heizeinrichtung als dampfbeheizter Wärmetauscher ausgebildet ist, der zwei fluidisch getrennte und in gegenseitigem thermischen Kontakt stehende Strömungswege aufweist, wobei ein erster Strömungsweg eingangsseitig mit einem Dampferzeuger verbindbar oder verbunden und ein zweiter Strömungsweg eingangsseitig mit der Pumpvorrichtung und ausgangsseitig mit dem Auslass verbindbar oder verbunden ist.

Durch eine Regelung der Dampfzufuhr kann die Heizleistung auf einfache Weise geregelt werden. Gleichzeitig erlaubt die hohe Kondensationsenergie von Dampf eine höhere Energiedichte als elektrische Heizungen, sodass der Wärmetauscher sehr kompakt gebaut werden kann. Ein mit Dampf beheizter Wärmetauscher kann mit einer vergleichsweise geringen thermischen Masse ausgeführt werden.

Durch die geringe thermische Masse und die steuerbare Dampfzufuhr kann der mit Dampf beheizte Wärmetauscher zum Ende eines Produktbezuges auf eine nicht ablagerungskritische Temperatur gebracht werden, zum Beispiel durch ein vorzeitiges Abschalten der Dampfzufuhr. Hierdurch kann einerseits eine höhere Produktetemperatur erreicht werden. Anderseits können auch kalte Produkte ausgegeben werden, ohne dass ein zusätzliches Umschaltventil benötigt würde.

Die Verbindung zwischen dem ersten Strömungsweg und dem Dampferzeuger kann direkt oder mittels einer Ventilvorrichtung geschaltet erfolgen. Ebenso kann die Verbindung zwischen zweitem Strömungsweg und dem Auslass direkt oder geschaltet erfolgen.

Vorzugsweise kann der erste Strömungsweg ein- oder auslassseitig mit einer Dampfregeleinrichtung, insbesondere einem Dosierventil, verbunden sein. Dieses ermöglicht auf einfache Weise eine Steuerung oder Regelung der Dampfzufuhr und damit der Heizleistung.

Die erfindungsgemäße Vorrichtung kann vorzugsweise mit einer wahlweise betreibbaren Aufschäumeinrichtung ausgestattet sein. Eine solche kann z.B. durch eine Luftzufuhr stromaufwärts der Pumpvorrichtung und einen Strömungswiderstand wie etwa einer Blende oder einem statischen Mischer stromabwärts der Pumpvorrichtung realisiert werden. Durch die saugseitig der Pumpvorrichtung angeordnete Luftzufuhr und die Erhöhung des Druckes in der Pumpvorrichtung durch den Strömungswiderstand wird das flüssige Lebensmittel aufgeschäumt. Durch Schließen der Luftzufuhr kann die Aufschäumvorrichtung deaktiviert werden. Durch Steuerung der Luftzufuhr und/oder der Leistung der Pumpvorrichtung kann die Schaumkonsistenz beeinflusst werden. Besonders gut gelingt der Aufschäumvorgang, wenn als Pumpvorrichtung eine Zahnradpumpe zum Einsatz kommt.

Bei einer bevorzugten Weiterbildung der Erfindung ist vorgesehen, dass der erste Strömungsweg ausgangsseitig mit einer vom zweiten Strömungsweg zum Auslass führenden Lebensmittelleitung verbindbar oder verbunden ist, vorzugsweise über einen Dreiwegeverbinder. Somit kann Restdampf hinter dem Primärkreis des Wärmetauschers dem erwärmten Lebensmittel beigemischt und somit eine Nacherwärmung erzielt werden. Der Wärmetauscher kann kompakt gebaut für eine nur geringere Heizleistung ausgelegt sein. Bei geringerer Dampfzufuhr kondensiert der Dampf im Wärmetauscher und die Wärme wird an das flüssige Lebensmittel abgegeben. Wird hingegen die Heizleistung durch Steigerung der Dampfzufuhr höht, so kommt es automatisch zu einer Dampfinjektion des nicht kondensierten Restdampfes und somit zu einer Nacherwärmung.

Beispielsweise wird für festen Schaum wenig Heizleistung benötigt und der gesamte Dampf kann im Wärmetauscher kondensieren. Das der kondensierte Dampf (Wasser) dem Schaum anschließend beigemischt wird, beeinträchtigt die Schaumkonsistenz nicht. Hierdurch wird der feste Schaum, anders als es bei Zugabe von Dampf der Fall wäre, nicht zerstört. Bei flüssigem Schaum oder bei ungeschäumter Milch wird hingegen eine höhere Heizleistung benötigt. Der Wärmetauscher kann hierbei so ausgelegt sein, dass er in diesem Fall alleine nicht genügend Leistung abgeben würde. Daher wird der nicht kondensierte Dampf der Milch bzw. dem flüssigen Milchschaum nachträglich beigemischt und sorgt so für eine Nacherwärmung.

Statt den kondensierten Dampf (Wasser) dem geschäumten Lebensmittel beizufügen, kann die Verbindung zwischen der Ausgangsseite des ersten Strömungswegs und der zum Auslass führenden Lebensmittelleitung über eine Ventilanordnung erfolgen. Über diese kann der erste Strömungsweg alternativ mit einem Abfluss verbunden und sodass bei der Erwärmung von festem Milchschaum das kondensierte Wasser abgeleitet werden, statt es dem Milchschaum beizumischen.

Auch der zweite Strömungsweg kann über eine (weitere) Ventilanordnung wahlweise mit dem Auslass oder einem Abfluss verbindbar sein. Hierdurch kann der zweite Strömungsweg des Wärmetauschers zum Spülen mit dem Abfluss verbunden werden, sodass Restmilch und/oder Spülflüssigkeit nicht zum Auslass ausgegeben werden und versehentlich in einem Trinkgefäß eines Benutzers landen können. Auch zur Durchführung automatischer Reinigungsläufe mit speziellem Reinigungsmittel kann der zweite Strömungsweg des Wärmetauschers mit dem Abfluss verbunden werden.

Bei einer besonders bevorzugten Ausführungsform kann die Vorrichtung mit einer am ersten Strömungsweg ein- oder auslassseitig angeordneten Dampfregeleinrichtung und einer wahlweise betreibbaren Aufschäumeinrichtung und mit einer Steuereinrichtung ausgestattet sein, welche programmtechnisch eingerichtet ist in einem erstem Betriebsmodus Aufschäumeinrichtung und/oder die Pumpvorrichtung zur Erzeugung eines festen Lebensmittelschaums anzusteuern sowie die Dampfregeleinrichtung zur Abgabe einer ersten, niedrigeren Dampfmenge anzusteuern und in einem zweiten Betriebsmodus die Aufschäumeinrichtung und/oder die Pumpvorrichtung zur Erzeugung eines flüssigen Lebensmittelschaums anzusteuern oder die Aufschäumeinrichtung zur Ausgabe ungeschäumten Lebensmittels zu deaktivieren sowie die Dampfregeleinrichtung zur Abgabe einer zweiten, höheren Dampfmenge anzusteuern.

Hierbei kann zweckmäßigerweise vorgesehen sein, dass die erste, niedrigere Dampfmenge so eingestellt ist, dass der Dampf vollständig innerhalb des Wärmetauschers kondensiert und die zweite, höhere Dampfmenge so eingestellt ist, dass auslassseitig am ersten Strömungsweg noch Dampf austritt, welcher über einen Dreiwegeverbinder einer vom zweiten Strömungsweg zum Auslass führenden Lebensmittelleitung zugeleitet wird.

Die beiden Strömungswege des Wärmetauschers können koaxial ausgeführt sein, wobei vorzugsweise der erste Strömungsweg den zweiten Strömungsweg umgibt. Hierdurch ergibt sich ein besonders kompakter und energieeffizienter Aufbau.

Die beiden Strömungswege des Wärmetausches können im Gegenstrom verschaltet sein. Hierdurch wird ein besonders effektiver Wärmeübertrag vom Dampf zum flüssigen Lebensmittel erreicht.

Die Vorrichtung kann mit einem ausgangsseitig mit dem zweiten Strömungsweg kommunizierenden Temperatursensor zur Messung der Temperatur des erwärmten flüssigen Lebensmittels ausgestattet sein. Dies ermöglicht eine Messung der Produkttemperatur und gegebenenfalls eine Regelung der Dampfzufuhr und/oder der Leistung der Pumpeinrichtung, um eine vorgegebene Ausgangstemperatur zu erzielen.

Der erste Strömungsweg kann einlassseitig über ein Ventil mit einer Kaltwasserzuleitung verbindbar sein. Hierdurch kann der Wärmetauscher mit Kaltwasser gespült und zur Ausgabe eines kalten Lebensmittelprodukts abgekühlt werden.

Weitere Vorteile und Eigenschaften der Erfindung ergeben sich aus der nachfolgenden Beschreibung von Ausführungsbeispielen anhand der Figuren. Es zeigt:
- Figur 1: ein Wasserlaufschema einer erfindungsgemäßen Vorrichtung mit einem dampfbeheizten Wärmetauscher zur Erwärmung von Milch in einem ersten Ausführungsbeispiel;
- Figur 2: ein zweites Ausführungsbeispiel mit einem dem dampfbeheizten Wärmetauscher vorgeschalteten elektrischen Durchlauferhitzer;
- Figur 3: ein drittes Ausführungsbeispiel mit einem ausgangsseitig des Primärkreises des Wärmetauschers angeordneten Regelventil;
- Figur 4: ein viertes Ausführungsbeispiel mit einer ausgangsseitig des Primärkreises des Wärmetauschers angeordneten Ventilanordnung, mit der kondensierter Dampf in einen Abfluss geleitet werden kann; und
- Figur 5: ein fünftes Ausführungsbeispiel, bei dem der Primärkreis des Wärmetauschers einlassseitig über ein Ventil mit einer Kaltwasserzuleitung verbindbar ist.

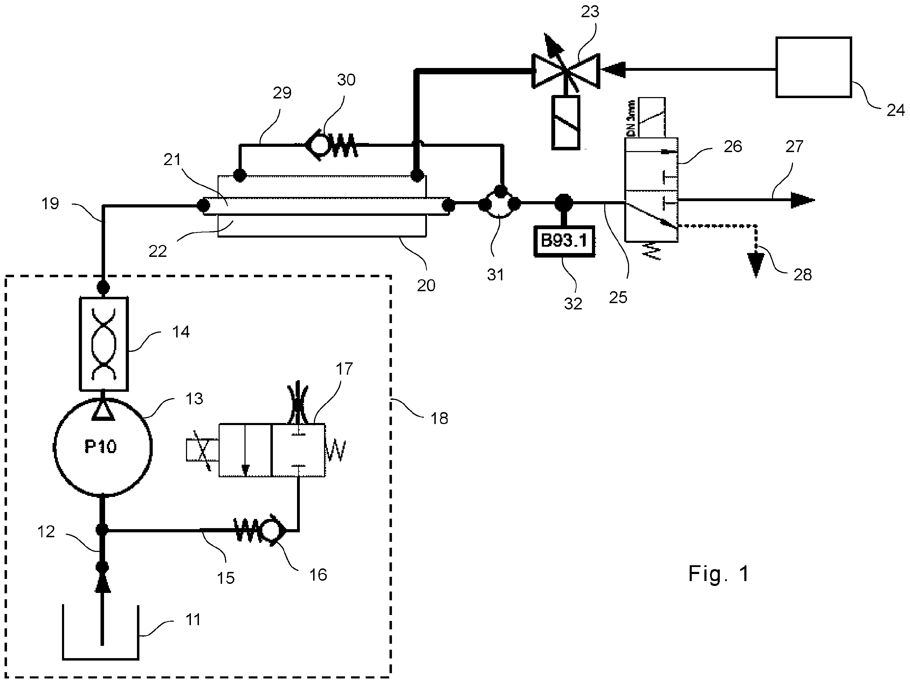

Ein erstes Ausführungsbeispiel einer Vorrichtung zum Erwärmen von Milch ist in Figur 1 schematisch dargestellt. Die Milch ist in einem Vorratsbehälter 11 vorgehalten. Über eine Ansaugleitung 12 kann diese mittels einer Milchpumpe 13 in Richtung eines Getränkeauslasses 27 gefördert werden. Die Druckseite der Milchpumpe 13 ist über einen statischen Mischer 14 (Wendelmischer) geführt, der als Strömungswiderstand wirkt und hierdurch zu einer Druckerhöhung in der Milchpumpe 13 beiträgt. In die Ansaugleitung 12 mündet eine Luftzuleitung 15 mit einem Rückschlagventil, welches ein Austreten von Milch verhindert, und einem Luftventil 17 zur Steuerung der Luftzufuhr. Das Luftventil kann ein intermittierend betriebenes Schaltventil oder ein Drosselventil wie etwa ein Nadelventil sein. Der Vorratsbehälter 11 ist zusammen mit der Milchpumpe 13 in einem Kühlschrank 18 untergebracht, sodass die Milch im Vorratsbehälter 11 und der anschließenden Förderstrecke gekühlt bleibt.

Über eine Förderleitung 19 gelangt die von der Milchpumpe 13 geförderte Milch in eine Heizeinrichtung 20, die als dampfbeheizter Wärmetauscher ausgebildet ist. Dieser ist koaxial aufgebaut mit einem inneren, von Milch durchströmten Strömungsweg 21 und einem äußeren Strömungsweg 22, der über ein Regelventil 23 eingangsseitig mit einem hier nur schematisch angedeuteten Dampferzeuger 24, z.B. einem Dampfboiler, verbunden ist und von Dampf durchströmt wird.

Der Ausgang des milchdurchströmten, inneren Strömungswegs 21 ist über eine Milchleitung 24 und ein optionales 3/2-Wegeventil, welches als Umschaltventil dient, mit dem Getränkeauslass 27 verbunden, über den erwärmte Milch oder Milchschaum portionsweise in ein unter dem Getränkeauslass platziertes Trinkgefäß ausgegeben wird. Das Umschaltventil 26 dient dazu, die Milchleitung 25 zur Entleerung zwecks Spülen oder Reinigen mit einem Abfluss 28 bzw. einem Drainagegefäß zu verbinden.

Der Ausgang des dampfdurchströmten äußeren Strömungswegs 22 ist über eine Leitung 29 und ein Rückschlagventil 30 über ein Dreiwegeverbinder 31 mit der Milchleitung 25 verbunden. Der Dreiwegeverbinder 31 kann als T-Stück mit oder ohne integrierte Mischkammer ausgebildet sein. Über die Leitung 29 wird ggf. noch nicht kondensierter Restdampf nach Durchlaufen des äußeren Strömungswegs des Wärmetauschers 20 in die Milchleitung eingespeist und sorgt dort automatisch für eine Nacherhitzung der im Wärmetauscher (vor-)erwärmten Milch.

Das Rückschlagventil verhindert, dass beim Abkühlen des Wärmetauschers und Kondensation ggf. noch im äußeren Strömungsweg 22 verbliebenen Restdampfs Milch in die Dampfleitung 29 angesaugt werden kann.

Ein mit der Milchleitung 25 verbundener Temperatursensor 32 dient dazu, die Milchtemperatur vor dem Auslass 27 zu messen und ermöglicht so eine aktive Regelung der Milchtemperatur. Eine Einstellung der Milchtemperatur kann durch Dosierung der Dampfmenge über das Regelventil 23 ebenso wie durch eine Regelung der Milchmenge durch eine Leistungsregelung der Milchpumpe 13 oder eine Kombination der genannten Maßnahmen erreicht werden.

Indem ansaugseitig der Milchpumpe 13 über die Luftzuleitung 15 Luft in die Ansaugleitung 12 zugeführt wird, wird in der Milchpumpe 13 und über den statischen Mischer 14 Milchschaum erzeugt. Über eine Einstellung der Luftmenge kann die Konsistenz des Milchschaums eingestellt werden.

Soll fester Milchschaum erzeugt werden, so wird mehr Luft zugeführt, indem das Luftventil länger (z.B. Einstellung des Tastverhältnisses bei einer getakteten Ansteuerung) oder weiter (im Falle eines Drosselventils) geöffnet wird. In diesem Fall soll der Milchschaum nicht durch Dampfzugabe hinter dem Wärmetauscher zerstört werden. Die Dampfmenge wird daher über das Regelventil 23 so eingestellt, dass der Dampf vollständig im Wärmetauscher 20 kondensiert. Aufgrund des höheren Luftanteils hat fester Milchschaum eine wesentlich niedrigere Wärmekapazität, sodass bereits die reduzierte Dampfmenge zur Erwärmung ausreicht.

Soll dagegen flüssiger Milchschaum erzeugt werden, so wird die Luftzufuhr gedrosselt, sodass weniger Luft zugeführt wird. Da der Milchschaum ohnehin eine eher flüssige Konsistenz aufweist, beeinträchtigt eine Dampfzufuhr hinter dem Wärmetauscher die Konsistenz des Milchschaums nicht wesentlich. Die Dampfmenge wird daher über das Regelventil 23 so eingestellt, dass mehr Dampf durch den Wärmetauscher 20 strömt, sodass allenfalls ein Teil des Dampfes kondensiert. Der Restdampf wird hinter dem Wärmetauscher 20 über den Dreiwegeverbinder 31 in den erwärmten Milchschaum injiziert, sodass eine zusätzliche Nacherwärmung mit Dampf stattfindet. Flüssiger Milchschaum kann daher bei höherer Temperatur ausgegeben werden als dies bei Verwendung eines elektrischen Durchlauferhitzers der Fall ist.

Zur Ausgabe ungeschäumter Milch wird die Luftzufuhr geschlossen und ebenfalls die Dampfmenge gegenüber festem Milchschaum erhöht. Da ungeschäumte Milch wegen des Luftanteils in flüssigem Milchschaum gegenüber diesem eine größere Wärmekapazität aufweist, kann die Dampfmenge zur Erwärmung ungeschäumter Milch größer als bei flüssigem Milchschaum gewählt werden, sodass eine größere Menge Dampf bzw. dieser auch mit einer höheren Endtemperatur in die erwärmte Milch injiziert wird und somit zu einer stärkeren Nacherhitzung führt. Damit kann Milch bei der Ausgabe deutlich höher erhitzt werden, als die mit einem elektrischen Durchlauferhitzer der Fall wäre.

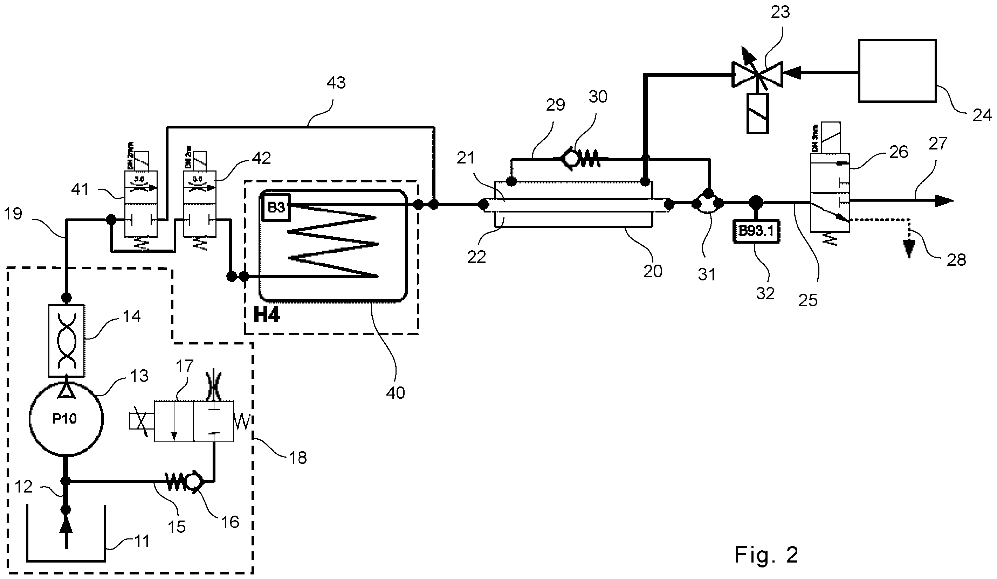

In Figur 2 ist als zweites Ausführungsbeispiel eine Variante gezeigt, bei der ausgehend vom ersten Ausführungsbeispiel zwischen Milchpumpe 13 und Wärmetauscher 20 zusätzlich ein herkömmlicher elektrischer Durchlauferhitzer 40, in Form eines Thermoblocks angeordnet ist. Durch die nun dreistufige Erwärmung (elektrischer Durchlauferhitzer, Wärmetauscher mit Dampf und anschließende Dampfinjektion) kann die Ausgangstemperatur weiter gesteigert und/oder die Dampfmenge reduziert werden, sodass der Milch weniger Wasser zugeführt wird.

Da der Durchlauferhitzer 40 eine höhere thermische Masse aufweist, als der Wärmetauscher 20, kann dieser nach einem Produktbezug nicht schnell wieder abkühlen. Für den Fall, dass kalte Milch oder kalter Milchschaum bezogen werden soll, ist daher eine Ventilanordnung mit zwei parallelgeschalteten Absperrventilen 41, 42 vorgesehen, mit denen die wahlweise geschäumte oder ungeschäumte Milch von der Milchpumpe entweder durch den Durchlauferhitzer 40 oder über eine Bypassleitung 43 unter Umgehung des Durchlauferhitzers 43 direkt zu dem Wärmetauscher 20 geleitet werden kann. Statt zwei einzelner Absperrventile kann natürlich zum Umschalten des Strömungswegs zwischen Durchlauferhitzer 40 und Bypassleitung 43 auch ein 3/2-Wegeventil verwendet werden.

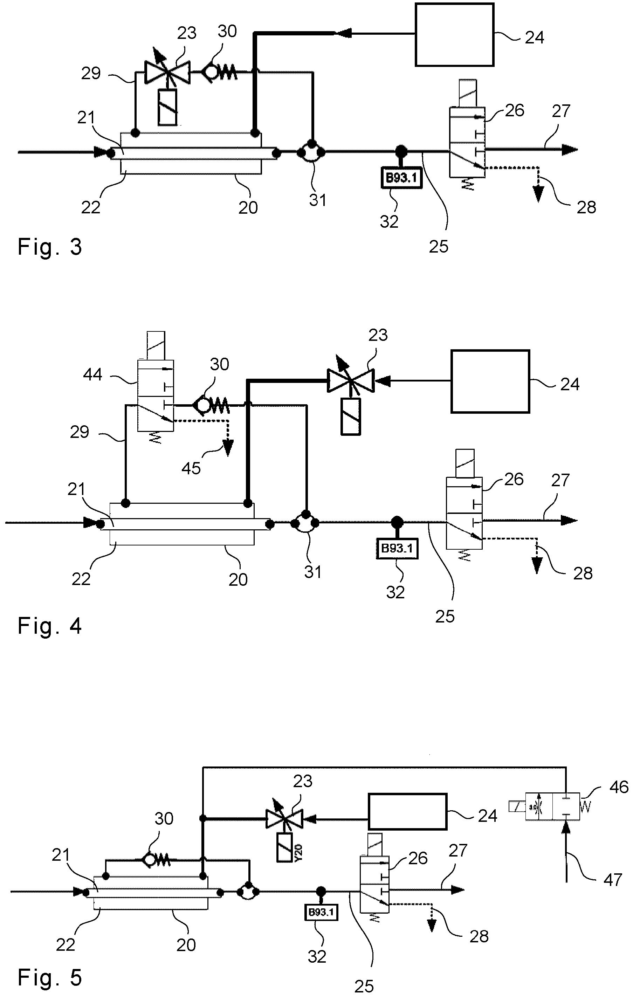

In Figur 3 ist als drittes Ausführungsbeispiel eine Variante gezeigt, bei der ausgehend vom ersten Ausführungsbeispiel das Regelventil 23 zum Einstellen der Dampfmenge, die durch den äußeren Strömungsweg 22 des Wärmetauschers 20 geleitet wird, statt zwischen Dampferzeuger 24 und äußerem Strömungsweg 22 des Wärmetauschers 20 nun ausgangsseitig des äußeren Strömungsweges 22 in der Leitung 29 zwischen dem Wärmetauscher 20 und dem Dreiwegeverbinder 31 angeordnet ist.

In Figur 4 ist als viertes Ausführungsbeispiel eine Variante gezeigt, bei der ausgehend vom ersten Ausführungsbeispiel der äußere, dampfdurchströmte Strömungsweg 22 über ein Umschaltventil 44 wahlweise mit dem Dreiwegeverbinder 31 oder alternativ mit einem Abfluss 45 verbunden werden kann. Somit ist wählbar, ob der Restdampf zur Nacherhitzung in die erwärmte Milch injiziert oder über den Abfluss 45 verworfen wird. Letzteres ist insbesondere dann sinnvoll, wenn die Dampfmenge soweit reduziert wurde, dass der Dampf vollständig oder zumindest größtenteils im Wärmetauscher 20 kondensiert und/oder fester Milchschaum erzeugt werden soll, der nicht durch Dampfeinleitung beeinträchtigt werden soll und/oder das im Durchlauferhitzer kondensierte Wasser nicht in das Getränk geleitet werden soll.

Für den Fall, dass lediglich Kondenswasser, also der kondensierte Dampf, in den Abfluss 45 abgeleitet werden soll, kann zusätzlich oder anstelle des Umschaltventils 44 auch ein Kondensatabscheider eingesetzt werden.

In Figur 5 ist als fünftes Ausführungsbeispiel schließlich eine Variante gezeigt, bei der ausgehend vom ersten Ausführungsbeispiel, bei dem der äußere Strömungsweg 22 des Wärmetrauschers 20 einlassseitig über ein 3/2-Wegeventil 46 wahlweise mit dem Dampferzeuger oder mit einer Kaltwasserzuleitung 47 verbunden werden kann. Somit kann nach einen Produktbezug der Wärmetauscher mit Kaltwasser durchgespült und somit abgekühlt werden. Dies kann als ergänzende Maßnahme sinnvoll sein, wenn anschließend ein kalte, also nicht erwärmte Milch oder Milchschaum ausgegeben werden soll.

Selbstverständlich ist es möglich und im Rahmen der vorliegenden Erfindung mit umfasst, in den Figuren 2 bis 5 vorgezeigten Abwandlungen und Ergänzungen in beliebiger Weise miteinander zu kombinieren.

## Patentansprüche

1. Vorrichtung zum Erwärmen flüssiger Lebensmittel, insbesondere Milch, mit einer Pumpvorrichtung (13) zum Fördern des flüssigen Lebensmittels aus einem Vorratsbehälter (11) zu einem Auslass (27) und mit einer zwischen Pumpvorrichtung (13) und Auslass (27) angeordneten Heizeinrichtung (20),
**dadurch gekennzeichnet, dass**
die Heizeinrichtung (20) als dampfbeheizter Wärmetauscher ausgebildet ist, der zwei fluidisch getrennte und in gegenseitigem thermischen Kontakt stehende Strömungswege (21, 22) aufweist, wobei ein erster Strömungsweg (22) eingangsseitig mit einem Dampferzeuger (24) verbindbar oder verbunden und ein zweiter Strömungsweg (21) eingangsseitig mit der Pumpvorrichtung (13) und ausgangsseitig mit dem Auslass (27) verbindbar oder verbunden ist.

2. Vorrichtung nach Anspruch 1, bei der der erste Strömungsweg (22) ein- oder auslassseitig mit einer Dampfregeleinrichtung (23), insbesondere einem Dosierventil, verbunden ist.

3. Vorrichtung nach Anspruch 1 oder 2 mit einer wahlweise betreibbaren Aufschäumeinrichtung (14, 15, 17).

4. Vorrichtung nach einem der vorangehenden Ansprüche, bei der der erste Strömungsweg (22) ausgangsseitig mit einer vom zweiten Strömungsweg (21) zum Auslass führenden Lebensmittelleitung (259 verbindbar oder verbunden ist, vorzugsweise über einen Dreiwegeverbinder (31).

5. Vorrichtung nach einem der vorangehenden Ansprüche, bei dem der zweite Strömungsweg (21) über eine erste Ventilanordnung (26) wahlweise mit dem Auslass (27) oder einem Abfluss (28) verbindbar ist.

6. Vorrichtung nach Anspruch 4, bei der die Verbindung zwischen der Ausgangsseite des ersten Strömungswegs (22) und der zum Auslass (27) führenden Lebensmittelleitung (25) über eine zweite Ventilanordnung (45) erfolgt, über welche der erste Strömungsweg (22) alternativ mit einem Abfluss (45) verbindbar ist.

7. Vorrichtung nach Anspruch 1, mit einer am ersten Strömungsweg (22) ein- oder auslassseitig angeordneten Dampfregeleinrichtung (23) und einer wahlweise betreibbaren Aufschäumeinrichtung (14, 15, 17) und mit einer Steuereinrichtung, welche programmtechnisch eingerichtet ist in einem erstem Betriebsmodus Aufschäumeinrichtung (14, 15, 17) und/oder die Pumpvorrichtung (13) zur Erzeugung eines festen Lebensmittelschaums anzusteuern sowie die Dampfregeleinrichtung (23) zur Abgabe einer ersten, niedrigeren Dampfmenge anzusteuern und in einem zweiten Betriebsmodus die Aufschäumeinrichtung (14, 15, 17) und/oder die Pumpvorrichtung (13) zur Erzeugung eines flüssigen Lebensmittelschaums anzusteuern oder die Aufschäumeinrichtung (14, 15, 17) zur Ausgabe ungeschäumten Lebensmittels zu deaktivieren sowie die Dampfregeleinrichtung (23) zur Abgabe einer zweiten, höheren Dampfmenge anzusteuern.

8. Vorrichtung nach Anspruch 7, bei der die erste, niedrigere Dampfmenge so eingestellt ist, dass der Dampf vollständig innerhalb des Wärmetauschers (20) kondensiert und die zweite, höhere Dampfmenge so eingestellt ist, dass auslassseitig am ersten Strömungsweg (22) noch Dampf austritt, welcher über einen Dreiwegeverbinder (31) einer vom zweiten Strömungsweg (21) zum Auslass (27) führenden Lebensmittelleitung (25) zugeleitet wird.

9. Vorrichtung nach einem der vorangehenden Ansprüche, bei der die Strömungswege (21, 22) koaxial ausgeführt sind, wobei vorzugsweise der erste Strömungsweg (22) den zweiten Strömungsweg (21) umgibt.

10. Vorrichtung nach einem der vorangehenden Ansprüche, bei der die Strömungswege (21, 22) im Gegenstrom verschaltet sind.

11. Vorrichtung nach einem der vorangehenden Ansprüche mit einem ausgangsseitig mit dem zweiten Strömungsweg (21) kommunizierenden Temperatursensor (32) zur Messung der Temperatur des erwärmten flüssigen Lebensmittels.

12. Vorrichtung nach einem der vorangehenden Ansprüche, bei dem der erster Strömungsweg (22) einlassseitig ist über ein Ventil (46) mit einer Kaltwasserzuleitung (47) verbindbar ist.
